(19) Europäisches Patentamt
European Patent Office
Office européen des brevets

(11) **EP 3 729 631 B1**

(12) **EUROPEAN PATENT SPECIFICATION**

(45) Date of publication and mention
of the grant of the patent:
**15.09.2021 Bulletin 2021/37**

(51) Int Cl.:
***H02M 7/493*** *(2007.01)*     ***H02M 7/49*** *(2007.01)*
***H02M 7/483*** *(2007.01)*     ***H02M 1/00*** *(2006.01)*

(21) Application number: **17825189.8**

(22) Date of filing: **18.12.2017**

(86) International application number:
**PCT/EP2017/083252**

(87) International publication number:
**WO 2019/120468 (27.06.2019 Gazette 2019/26)**

(54) **MMC PHASE LEG AND METHOD FOR CONTROL THEREOF**

MMC-PHASENZWEIG UND VERFAHREN ZU DESSEN STEUERUNG

BRANCHE DE PHASE MMC ET PROCÉDÉ DE COMMANDE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.10.2020 Bulletin 2020/44**

(73) Proprietor: **ABB Power Grids Switzerland AG
5400 Baden (CH)**

(72) Inventors:
• **MV, Aravind
77133 Ludvika (SE)**
• **NAMI, Alireza
722 16 Västerås (SE)**

(74) Representative: **AWA Sweden AB
P.O. Box 45086
104 30 Stockholm (SE)**

(56) References cited:
**WO-A1-2017/016675**     **US-A1- 2014 140 104**
**US-A1- 2015 365 011**

**Description**

**TECHNICAL FIELD**

The present disclosure relates to a power converter phase leg of a Modular Multilevel Converter (MMC) and to a method for control thereof.

**BACKGROUND**

An MMC, also known as Chain-Link Converter (CLC), comprises a plurality of converter cells (also known as modules or submodules), serially connected in phase legs, which may comprise converter branches (also known as arms), that in turn may be arranged in a star (also known as Y or wye), double-star (double-Y/wye) or delta ($\Delta$), direct or indirect converter topology. Each converter cell comprises, in the form of a half-bridge (also known as monopolar) or full-bridge (also known as H-bridge or bipolar) circuit, a capacitor for storing energy and power semiconductor switches such as Insulated Gate Bipolar Transistor (IGBT) devices, Gate-Turn-Off Thyristor (GTO) devices, Integrated Gate Commutated Thyristor (IGCT) devices or Metal-Oxide-Semiconductor Field-Effect Transistor (MOSFET) devices for connecting the capacitor to the converter branch with one or two polarities.

Documents WO2017/016675, US2014/140104 and US2015/365011 are prior art to the present application.

**SUMMARY**

In a conventional MMC, each of the phase legs contains series connected full bridge (or half bridge) cells. Each of the legs is rated to 1 p.u. (per unit) voltage and 1 p.u. current considering normal operation. For unbalanced operation, there is current de-rating for a Static Synchronous Compensator (STATCOM) in delta configuration and voltage de-rating for a STATCOM in wye configuration.

In order to balance the energies of the cell capacitors, the net power absorbed or given by each leg must be zero for STATCOM applications. This indicates that the voltage and current of each leg are in quadrature with each other, i.e. at maximum +/- voltage the current is zero, and at maximum +/- current the voltage is zero, the voltage and current being essentially sinusoidal. Hence, chain-link legs with 1 p.u. voltage and current is not required to generate these voltage and current waveforms. In accordance with the present invention, it has been realized that chain-link legs with lower current and voltage ratings may be series or parallel connected using breakers, also called director switches, to achieve the voltage and current waveforms. By doing so, a significant reduction in conduction losses and cell capacitor size can be achieved. Though STATCOM is considered as an example of study the same logic holds true also for other MMC, e.g. for High-Voltage Direct Current (HVDC) converter applications.

The invention is defined by the features of device claim 1 and method claim 8. The dependent claims recite advantageous embodiments of the invention.

According to an aspect of the present invention, there is provided a power converter phase leg for an MMC. The phase leg comprises a first cell arrangement comprising a plurality of series connected converter cells. The phase leg also comprises a second cell arrangement comprising a plurality of series-connected converter cells. The phase leg also comprises a breaker arrangement comprising a plurality of breakers and arranged to enable alternately connecting the first and second cell arrangements in series and in parallel by means of said plurality of breakers.

According to another aspect of the present invention, there is provided an MMC comprising an embodiment of the phase leg of the present disclosure, and a control system arranged for controlling the MMC.

According to another aspect of the present invention, there is provided a method of controlling a power converter phase leg of an MMC. The phase leg comprises a first cell arrangement comprising a plurality of series connected converter cells, a second cell arrangement comprising a plurality of series-connected converter cells, and a breaker arrangement comprising a plurality of breakers. The method comprises obtaining current information that a current through the phase leg is above a predetermined current threshold. The method also comprises, based on the obtained current information, by means of the plurality of breakers, connecting the first and second cell arrangements in parallel. The method also comprises obtaining voltage information that a voltage across the phase leg is above a predetermined voltage threshold. The method also comprises, based on the obtained voltage information, by means of the plurality of breakers, connecting the first and second cell arrangements in series.

According to another aspect of the present invention, there is provided a computer program product comprising computer-executable components for causing a control system to perform an embodiment of the method of the present disclosure when the computer-executable components are run on processing circuitry comprised in the control system.

By being able to alternately connecting the first and second cell arrangements in either series or parallel, semiconductor devices having lower voltage and/or current ratings may be used in the converter cells, since the current through and voltage across the converter leg (or arm, if the leg comprises more than one, e.g. two, arms) do not both reach their +/- maximum at the same time, i.e. none of the semiconductor devices will need to withstand maximum voltage and maximum current at the same time. Rather, the cell arrangements may alternatingly be connected in series (when the voltage is high) and in parallel (when the current is high), reducing the ratings needed, thus also reducing the cost of the semiconductor devices.

The current information and voltage information, respectively, may be obtained based on real-time voltage and/or current measurements, preferably voltage measurements, in the MMC. With knowledge of the relationship between the voltage and current (they are typically in quadrature with each other) it may be enough to measure either of the current and the voltage, e.g. the voltage, in order to also know the other one of the current and the voltage, e.g. the current. Alternatively, especially if the relationship between the voltage and current is known, the current and voltage information may be obtained without real-time measurements of either voltage and current. The current and voltage information may e.g. be based on time points when firing pulses are sent to the switches/valves of the converter cells.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

## BRIEF DESCRIPTION OF THE DRAWINGS

Embodiments will be described, by way of example, with reference to the accompanying drawings, in which:

Fig 1a is a schematic diagram of an embodiment of an MMC in delta ($\Delta$) configuration, in accordance with the present invention.

Fig 1b is a schematic diagram of an embodiment of an MMC in wye (Y) configuration, in accordance with the present invention.

Fig 1c is a schematic diagram of an embodiment of an MMC in double-wye (also known as double-star) configuration, in accordance with the present invention.

Fig 2 is a schematic diagram of an embodiment of a converter cell of an MMC, in accordance with the present invention.

Fig 3 is a schematic diagram of an embodiment of a part of an MMC phase leg, comprising two cell arrangements (one of which is shown in a zoom view) and associated breakers arranged to connect the cell arrangements in either parallel or series, in accordance with the present invention.

Fig 4 is a schematic diagram of an embodiment of a part of an MMC phase leg, comprising a plurality of series connected cell modules, each module comprising two cell arrangements (e.g. as in figure 3), in accordance with the present invention.

Fig 5 is a schematic block diagram of an embodiment of a control system of an MMC, in accordance with the present invention.

Fig 6 is a schematic flow chart of an embodiment of a method of the present invention.

## DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

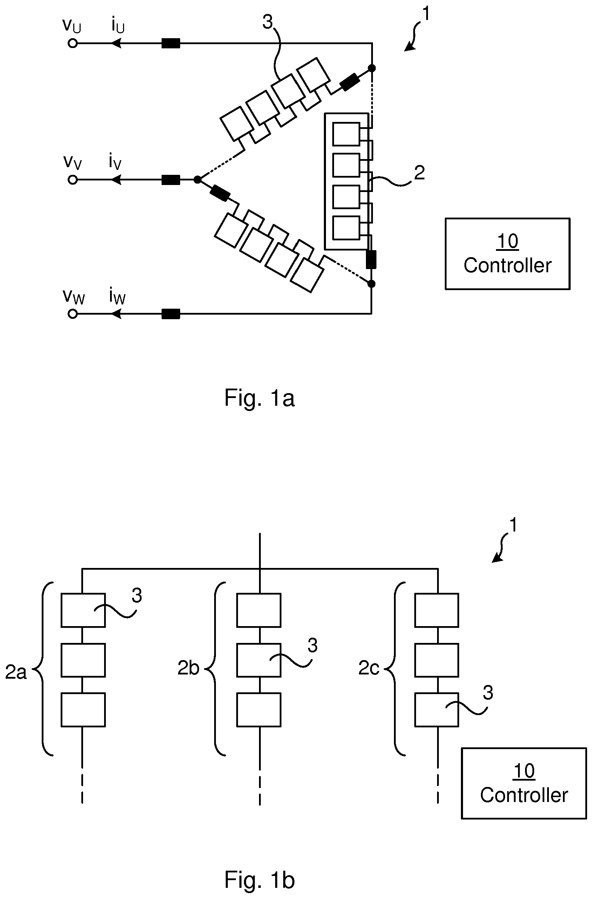

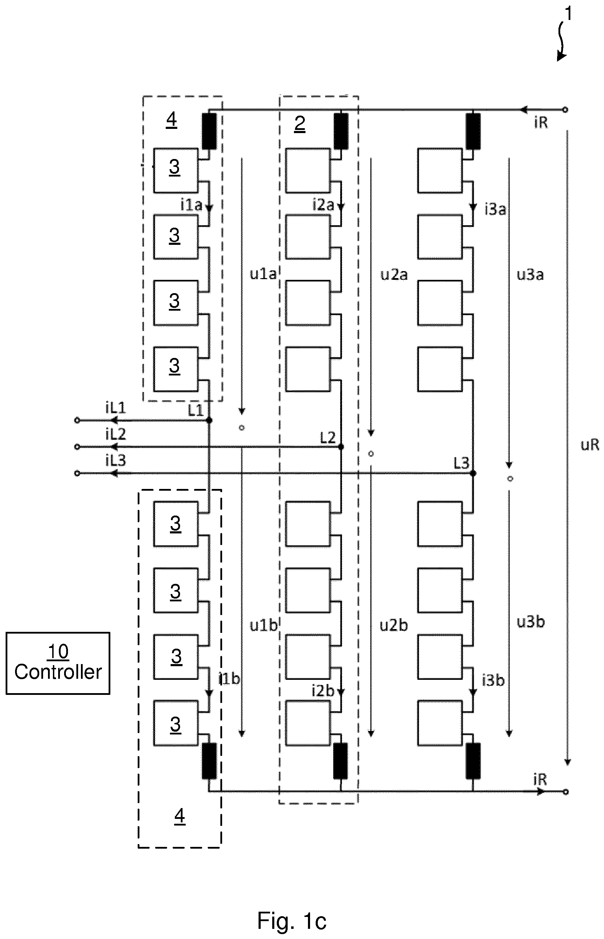

Figures 1a and 1b illustrate different MMC configurations, delta configuration in figure 1a and wye configuration in figure 1b. In each case, the MMC 1 comprises three phase legs 2, each thus comprising only one arm/branch, each leg (and thus arm) comprising a plurality of converter cells 3, here conventionally series connected. In applications where each leg 2 comprises a plurality of arms 4, such as in case of e.g. a double-wye configuration as depicted in figure 1c where each leg 2 comprises two arms 4. What is herein said about a phase leg 2 may thus be relevant for each arm 4 of a configuration where a phase leg comprises more than one arm.

The delta connected MMC 1 of figure 1a may e.g. be comprised in a STATCOM of a three-phase alternating current (AC) system, having the three phases U, V and W, and thus the voltages Vu, Vv and Vw, and currents iu, iv and iw, as shown in the figure. The wye connected MMC 1 in figure 1b may e.g. be between an three-phase AC network and a DC network, e.g. a HVDC network, where each of the three phase legs 2a, 2b and 2c correspond to a phase of the AC network and all connect to the DC network.

The MMC 1 also comprises a control system 10, as schematically illustrated in figures 1a and 1b.

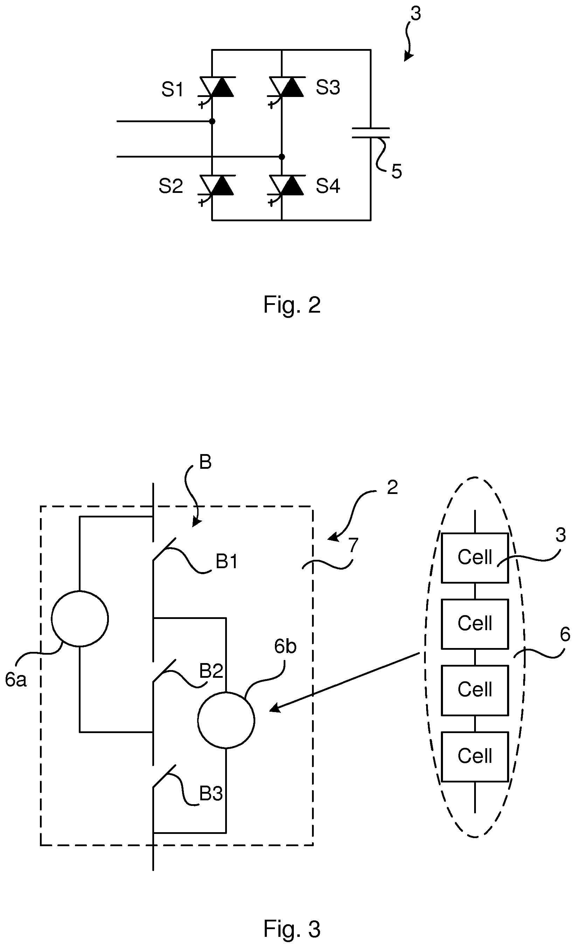

Figure 2 illustrates an MMC cell 3, e.g. of a converter 1 as illustrated in figures 1a and 1b. The cell 3 comprises an energy storage 5, typically a capacitor arrangement comprising at least one capacitor, over which a DC voltage of the cell is formed. A plurality of semiconductor switches S form a half-bridge (also called monopolar) or full-bridge (also called H-bridge or bipolar) topology, herein (as is preferred in some embodiments of the invention) four semiconductor switches S1-S4 form a full-bridge topology.

The converter cells 3 used in embodiments of the present invention may be half or full bridge cells depending on the application and requirement. The industrial Insulated-Gate Bipolar Transistor (IGBT), e.g. linpak (or) low voltage IGBT, may be a convenient choice as semiconductor device in the switches S in the cells. However, other semiconductor devices may additionally or alternatively be used, such as Integrated Gate-Commutated Thyristor (IGCT) or silicon carbide (SiC) devices, etc. It is to be noted that the cell arrangements 6 may need some inductance in series with the cells 3 therein to control the circulating current between the cell arrangements when they are connected in parallel. If an inductance is added in series with the cells in each cell arrangement, e.g. in a module 7, the effective inductance of any smoothing reactor at the MMC arm or leg 2 level could be reduced. Also, another option could be to add a small inductor to only one of the cell arrangements in a module. The idea may then be to use this one cell arrangement in the module as a current source and the other cell arrangement in that module as a voltage source. This may give more flexibility when the connection of the cell arrangements is changed from series to parallel or *vice versa.* However, such an arrangement may lose the mechanical symmetry of the module topology.

Figure 3 illustrates a series-parallel hybrid part or module 7 of chain-link arm of a phase leg 2 in accordance with the present invention, for MMC topologies, e.g. for Flexible Alternating Current Transmission Systems (FACTS) applications. For example for STATCOM application, the voltage and current are in quadrature with each other which ensures that the peaks of voltage and current, respectively, do not happen at the same time (which is also true for e.g. HVDC applications). Hence, the idea is to have two lesser voltage and current rated chain-link arms 6, herein called cell arrangements, which can be connected in series or parallel, alternately, to meet the voltage and current requirements, respectively, using director switches, herein called breakers.

The phase leg 2 comprises a first cell arrangements 6a and a second cell arrangement 6b, each comprising a plurality of series-connected converter cells 3. The first and second cell arrangements 6 may each comprise the same number of cells 3, or the first cell arrangement 6a may comprise a different number of cells 3 compared to the second cell arrangement 6b. Similarly, the cells in the first cell arrangement 6a may be arranged in the same topology as the cells in the second cell arrangement 6b, or the cells in the first cell arrangement 6a may be arranged in a different topology compared to the cells in the second cell arrangement 6b. The most simple topology, and often preferred, for the first and/or the second cell arrangement (preferably both) is with all cells 3 in the cell arrangement 6 connected in series, as shown in figure 3 for the second cell arrangement 6b. However, other topologies for the cells in either or both cell arrangements 6a and 6b are contemplated, as long as the topology comprises a plurality of series connected cells 3. For instance, the topology in either or both cell arrangements 6a and 6b may comprise two parallel connected chains of series connected cells 3.

A breaker arrangement B comprising a plurality of breakers (diverter switches) is arranged to alternately connect the first and second cell arrangements 6 in parallel and in series with each other. For example, as shown in figure 3, the breaker arrangement B may comprise three breakers, B1, B2 and B3 along a bus of the phase leg 2, where the first cell arrangement 6a is connected across the first and second breakers B1 and B2, and the second cell arrangement is connected across the second and third breakers B2 and B3. In this way, the first and second cell arrangements 6a and 6b are connected in series when the first and third breakers B1 and B3 are open (not conducting) and the second breaker B2 is closed (conducting). Conversely, the first and second cell arrangements 6a and 6b are connected in parallel when the first and third breakers B1 and B3 are closed (conducting) and the second breaker B2 is open (not conducting). It is to be noted that when the cell arrangements 6 are connected in parallel, a circulating current may flow depending on the capacitor charge levels in the cell arrangements. Hence, a smoothing reactor may be included in series with either or both of the cell arrangements to limit and control the circulating current if desired.

Each of the breakers may be of any suitable type, including a mechanical circuit breaker/switch or a semiconductor switch e.g. comprising a, or a plurality of, semiconductor switch S as discussed herein. For instance, the breaker arrangement may comprise a series connection of semiconductor switches S, e.g. a series connection of converter cells 3. The breakers of the breaker arrangement B may comprise bi-directional switches, e.g. conduct and block voltage in both directions with a gate command. It may be desirable to use only one switch per breaker to reduce the complexity compared with series connection of switches in each breaker. Hence, the choice of semiconductor switch for the breaker may be any of e.g. Reverse-Blocking IGBT (RB-IGBT), Reverce-Blocking IGCT (RB-IGCT), Bi-directional Conducting Thyristor (BCT), Bidirectional SiC switches, etc. Using BCT may be convenient in terms of conduction losses and robustness. But, for the commutation of thyristors, the cell arrangements may need to generate reverse voltage from its current voltage state for a duration of thyristor commutation time ($t_q$). This may increase the switching losses and also generates voltage notches on the generated AC voltage waveform. The distortion on the generated AC voltage can be eliminated by sequential turn-off of the thyristors one by one among the various modules 7 and using a cell arrangement 6 of other module to generate an exact opposite voltage to compensate for the AC side notches utilizing the voltage over-rating from redundancy. By this method the AC side notches may be eliminated completely, but still there may be higher switching losses and over-rating of the converter as the thyristors are commutated module by module. Note, that with this method the net transition from parallel to series or *vice versa* for all the modules may happen with a time duration of $t_q$*No. of modules. Hence, the voltage rating of the modules may need to be

$$V_{rating} = cos\big(2\pi t_q N_{module} f_b + \sin^{-1}(I_{rating})\big),$$

to accommodate this effect as well. Thus, it may be desired to have lesser commutation time for the thyristors, e.g. in the range of 100 $\mu$s to 200 $\mu$s. Due to the complexity introduced by the thyristors, it may be preferred to use RB-IGBT's or RB-IGCT's for the breakers of the breaker arrangement(s) B.

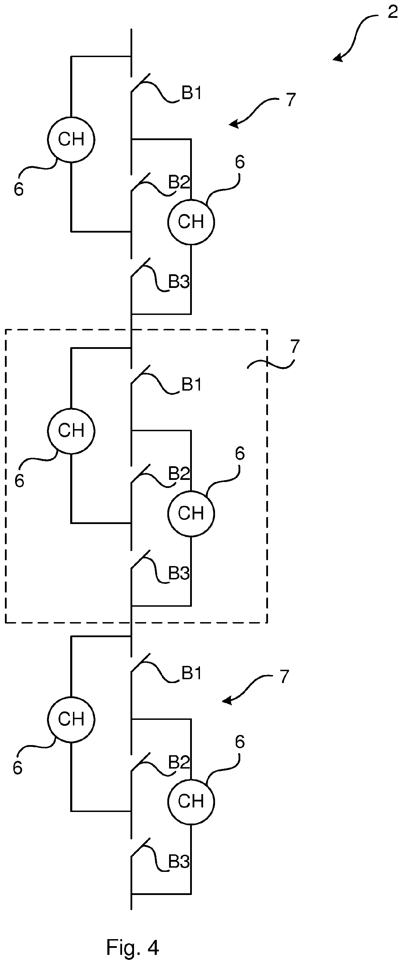

In a specific embodiment, the topology in either or both cell arrangements 6a and 6b comprises first and second cell arrangements with breakers arranged for alternately connecting them in series or parallel, i.e. a cell arrangement 6 may itself contain the topology of a phase leg module 7 shown in figure 3 (see also figure 4 with modules 7). The topology of a module 7 may thus recursively also occur in any or both of the cell arrangements 6a and 6b. For ease of reading, cell arrangements occurring recursively within a cell arrangement is herein called a sub-arrangement. Thus, the first and/or second cell arrangement may comprise a first cell sub-arrangement 6a comprising a plurality of series connected converter cells 3, a second cell sub-arrangement 6b comprising a plurality of series-connected converter cells 3, and a breaker sub-arrangement B comprising a plurality of breakers B1, B2 and B3 and arranged to alternately connect the first and second cell sub-arrangements in series and in parallel by means of said plurality of breakers. For STATCOM, and other, applications, the voltage and currents are in quadrature with each other. Hence, the voltage and current rating $V_{rating}$ and $I_{rating}$ of the cell arrangements 6 are chosen to meet the voltage and current requirement for rated zero power factor operation either by connecting the cell arrangements in series or parallel mode. Some of the voltage and current rating of the cell arrangements for which rated zero power factor operation is feasible is shown in Table 1. For case #1 shown in the table, the cell arrangements are connected in parallel when the voltage is between ±0.5 p.u. and connected in series otherwise. For zero power factor operation, the current is 0.866 p.u. when the voltage is 0.5 p.u. which dictates the current requirement.

Table1

| Case No. | Voltage (V) [p.u.] | Current (I) [p.u.] |
|---|---|---|
| #1 | 0.5 | 0.866 |
| #2 | 0.707 | 0.707 |
| #3 | 0.866 | 0.5 |

Similarly the other cases (#2 and #3) shown in Table 1 can be arrived at. A simple equation relating the voltage and current rating is given by Equation 1. The equation is valid for voltage rating greater than 0.5 p.u. when the current input to the equation is between 0.5 p.u to 1 p.u.

$$V_{rating} = cos\big(\sin^{-1}(I_{rating})\big), \; where \; 0.5 < I_{rating} < 0.866 \qquad (1)$$

It is to be noted that it may be beneficial to have lower current ratings since they have a direct impact on the conduction losses, cell capacitance and cost reduction on the auxiliary components like bus bars, cell capacitors and other protection equipment etc. Hence, the chosen voltage and current rating for the cell arrangements 6 and breakers B for the MMC leg 2 may be chosen as e.g. 0.866 p.u. and 0.5 p.u., respectively.

Figure 4 illustrates a part of an arm of a phase leg 2, comprising a plurality of modules 7, as in figure 3, in series. In the figure, three series connected modules are shown but any number of series connected modules may be used in different embodiments. By the use of a plurality of modules 7 in series, more flexibility is allowed for the number of cell arrangements 6 which may at any time be connected in series and in parallel. For example, in the example of figure 4 with three series connected modules 7, each with two cell arrangements 6 for a total of six cell arrangements, all six cell arrangements may be connected in series (if, in each module 7, the first and third breakers B1 and B3 are open and the second breaker B2 is closed), or three parallel connected pairs of cell arrangements may be in series (if, in each module 7, the first and third breakers B1 and B3 are closed and the second breaker B2 is open), but it is also possible to allow the cell arrangements 6 of some module(s) 7 to be connected in series while the cell arrangements of some other module(s) are connected in parallel. Thereby, the proposed hybrid arms/legs 2 may be further scaled down to modules 7. Each of the modules may represent one stack where several such stacks in series form one arm of the phase leg 2 of the MMC 1. It may be convenient to have two to four cells 3 per cell arrangement 6 in each module 7 so that a single position high voltage reverse blocking switch can be used for the breakers (director valves) of the breaker arrangement B of each module 7. The ability to modularize aids in scalability and redundancy of the converter design.

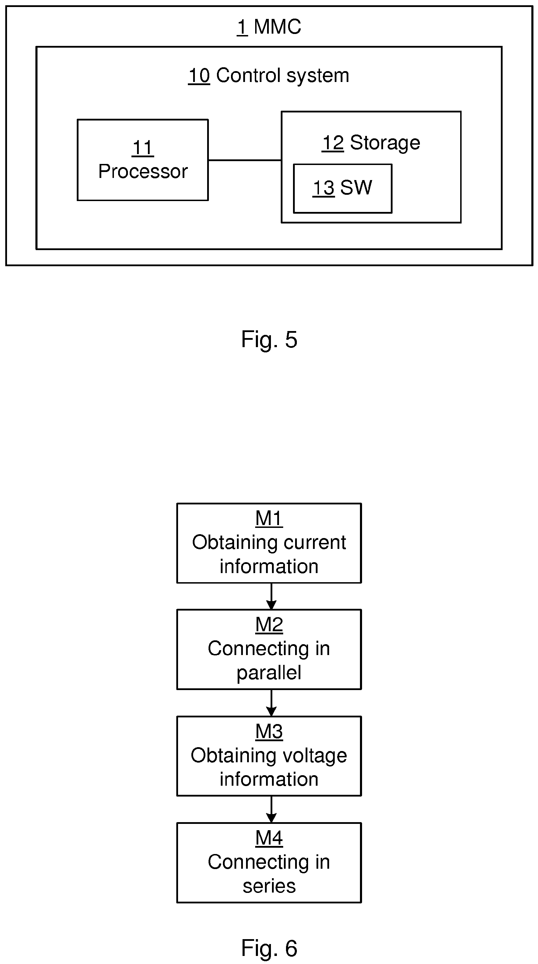

Figure 5 schematically illustrates an embodiment of a control system 10 for or comprised in an MMC 1 of the present disclosure. The control system 10 comprises processing circuitry 11 e.g. a central processing unit (CPU). The processing circuitry 11 may comprise one or a plurality of processing units in the form of microprocessor(s). However, other suitable devices with computing capabilities could be comprised in the processing circuitry 11, e.g. an application specific integrated circuit (ASIC), a field programmable gate array (FPGA) or a complex programmable logic device (CPLD). The processing circuitry 11 is configured to run one or several computer program(s) or software (SW) 13 stored in a data storage 12 of one or several storage unit(s) e.g. a memory. The storage unit 12 is regarded as a computer readable means as discussed herein and may e.g. be in the form of a Random Access Memory (RAM), a Flash memory or other solid state memory, or a hard disk, or be a combination thereof. The processing circuitry 11 may also be configured to store data in the storage 12, as needed. The control system 10 may also comprise a communication interface for internal communication within the system and/or external communication with e.g. the other parts of the MMC, e.g. for sending firing pulses to the switches S of the converter cells 3. The control system may be centralized or distributed, or (typically) a combination thereof with a central part, e.g. located in a control room, and a local part, co-located with the phase leg 2, e.g. comprising local controllers with each of the cells 3 of the phase leg.

When the topology of a cell arrangement 6 or module 7 is discussed herein, the number and connection of cells 3 therein is intended. For instance, if two entities (e.g. cell arrangements or modules) are symmetrical (have the same topology), they each contain the same number of cells 3 which are all connected in the same way as in the other entity. Conversely, if two entities (e.g. cell arrangements or modules) are asymmetrical (differ in topology) they differ in either how many cells 3 are in each entity and/or in how the cells are connected (e.g. in series or parallel). Mirror symmetrical entities are regarded as symmetrical, having the same topology.

In some embodiments of the present invention, the first cell arrangement 6a has a topology which is symmetrical to a topology of the second cell arrangement 6b. The cell arrangements thus each contains the same number of cells, connected in the same way. In some other embodiments of the present invention, the first cell arrangement 6a has a topology which is asymmetrical to a topology of the second cell arrangement 6b.

In some embodiments of the present invention, the first and second cell arrangements 6a and 6b in combination with the breaker arrangement B constitutes a module 7, and the phase leg 2 comprises a plurality of series connected such modules. In some embodiments, the series connected modules all have the same topology, i.e. are symmetrical in relation to each other.

Figure 6 is a schematic flow chart of an embodiment of the method of the present invention. The method is for controlling a power converter phase leg 2 of an MMC 1. The phase leg 2 comprises a first cell arrangement 6 comprising a plurality of series connected converter cells 3, a second cell arrangement 6 comprising a plurality of series-connected converter cells 3, and a breaker arrangement B comprising a plurality of breakers B1, B2 and B3. The method comprises obtaining M1 current information that a current through the phase leg is above a predetermined current threshold. The method also comprises, based on the obtained M1 current information, by means of the plurality of breakers, connecting M2 the first and second cell arrangements in parallel. Before or after steps M1 and M2, the method also comprises obtaining M3 voltage information that a voltage across the phase leg is above a predetermined voltage threshold. Then the method also comprises, based on the obtained M3 voltage information, by means of the plurality of breakers, connecting M4 the first and second cell arrangements in series. Thus, steps M3 and M4 may be performed either before or after steps M1 and M2.

In some embodiments, the control system 10 may be arranged to perform embodiments of the method of the present disclosure, especially when comprised in an MMC 1 comprising at least one phase leg 2 comprising a first cell

**EP 3 729 631 B1**

arrangement 6 comprising a plurality of series connected converter cells 3, a second cell arrangement 6 comprising a plurality of series-connected converter cells 3, and a breaker arrangement B comprising a plurality of breakers B1, B2 and B3. Thus, the control system 10 may comprise processing circuitry 11, and data storage 12 storing instructions 13 executable by said processing circuitry 11 whereby said control system 10 is operative to obtain M1 current information that a current through the phase leg is above a predetermined current threshold; based on the obtained M1 current information, by means of the plurality of breakers, connect M2 the first and second cell arrangements in parallel; obtain M3 voltage information that a voltage across the phase leg is above a predetermined voltage threshold; and based on the obtained M3 voltage information, by means of the plurality of breakers, connecting M4 the first and second cell arrangements in series.

Embodiments of the present invention may be conveniently implemented using one or more conventional general purpose or specialized digital computer, computing device, machine, or microprocessor, including one or more processors 11, memory and/or computer readable storage media 12 programmed according to the teachings of the present disclosure. Appropriate software 13 coding can readily be prepared by skilled programmers based on the teachings of the present disclosure, as will be apparent to those skilled in the software art.

In some embodiments, the present invention includes a computer program product 12 which is a non-transitory storage medium or computer readable medium (media) having instructions 13 stored thereon/in, in the form of computer-executable components or SW, which can be used to program a computer to perform any of the methods/processes of the present invention. Examples of the storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

The present disclosure has mainly been described above with reference to a few embodiments. However, as is readily appreciated by a person skilled in the art, other embodiments than the ones disclosed above are equally possible within the scope of the present disclosure, as defined by the appended claims.

**Claims**

1. A Modular Multilevel Converter, MMC, (1), comprising:

   a control system (10) arranged for controlling the MMC; and
   a power converter phase leg (2), the phase leg comprising:

      a first cell arrangement (6a) comprising a plurality of series connected converter cells (3);
      a second cell arrangement (6b) comprising a plurality of series-connected converter cells (3); and
      a breaker arrangement (B) comprising a plurality of breakers (B1, B2, B3) and arranged to enable alternately connecting the first and second cell arrangements in series and in parallel by means of said plurality of breakers;

   wherein the breaker arrangement comprises three breakers (B1, B2, B3) connected in series along a bus of the phase leg, where the first cell arrangement (6a) is connected across the first and second breakers (B1, B2) and the second cell arrangement (6b) is connected across the second and third breakers (B2, B3); and
   wherein the control system (10) comprises processing circuitry (11) and data storage (12) storing instructions (13) executable by said processing circuitry whereby said control system is operative to:

      obtain current information that a current through the phase leg is above a predetermined current threshold, and based on the obtained current information, by means of the plurality of breakers, connect the first and second cell arrangements in parallel; and
      obtain voltage information that a voltage across the phase leg is above a predetermined voltage threshold, and based on the obtained voltage information, by means of the plurality of breakers, connect the first and second cell arrangements in series;
      such that the first and second cell arrangements are alternatingly connected in series, when the voltage across the phase leg is high, and in parallel, when the current through the phase leg is high.

2. The MMC of claim 1, wherein the first cell arrangement (6a) has a topology which is symmetrical to a topology of the second cell arrangement (6b).

3. The MMC of claim 1, wherein the first cell arrangement (6a) has a topology which is asymmetrical to a topology of

7

the second cell arrangement (6b).

4. The MMC of any preceding claim, wherein the first and second cell arrangements (6a, 6b) in combination with the breaker arrangement (B) constitutes a module (7), and wherein the phase leg (2) comprises a plurality of series connected such modules.

5. The MMC of claim 4, wherein the series connected modules all have the same topology.

6. The MMC of any preceding claim, wherein the first and/or second cell arrangement comprises:

   a first cell sub-arrangement (6a) comprising a plurality of series connected converter cells (3);
   a second cell sub-arrangement (6b) comprising a plurality of series-connected converter cells (3); and
   a breaker sub-arrangement (B) comprising a plurality of breakers (B1, B2, B3) and arranged to alternately connect the first and second cell sub-arrangements in series and in parallel by means of said plurality of breakers.

7. The MMC of any preceding claim, wherein the MMC (1) is a Static Synchronous Compensator, STATCOM, or a High-Voltage Direct Current, HVDC, converter.

8. A method of controlling a power converter phase leg (2) of a Modular Multilevel Converter, MMC, (1), wherein voltage and current are in quadrature with each other such that the current through, and the voltage across, the phase leg do not reach their maximum at the same time, the phase leg comprising:

   a first cell arrangement (6a) comprising a plurality of series connected converter cells (3);
   a second cell arrangement (6b) comprising a plurality of series-connected converter cells (3); and
   a breaker arrangement (B) comprising a plurality of breakers (B1, B2, B3) wherein the breaker arrangement comprises three breakers (B1, B2, B3) connected in series along a bus of the phase leg, where the first cell arrangement (6a) is connected across the first and second breakers (B1, B2) and the second cell arrangement (6b) is connected across the second and third breakers (B2, B3);
   the method comprising:

      obtaining (M1) current information that a current through the phase leg is above a predetermined current threshold, and
      based on the obtained (M1) current information, by means of the plurality of breakers, connecting (M2) the first and second cell arrangements in parallel; and
      obtaining (M3) voltage information that a voltage across the phase leg is above a predetermined voltage threshold, and
      based on the obtained (M3) voltage information, by means of the plurality of breakers, connecting (M4) the first and second cell arrangements in series;
      such that the first and second cell arrangements are alternatingly connected in series, when the voltage across the phase leg is high, and in parallel, when the current through the phase leg is high.

9. The method of claim 8, performed in a control system (10) comprised in the MMC (1).

10. A computer program product (12) comprising computer-executable components (13) for causing a control system (10) to perform the method of any one of claims 8-9 when the computer-executable components are run on processing circuitry (11) comprised in the control system.


**Patentansprüche**

1. Modularer mehrstufiger Umrichter, MMC, (1) umfassend:

   ein Steuersystem (10), das zum Steuern des MMC angeordnet ist; und
   einen Leistungsumrichter-Phasenzweig (2), wobei der Phasenzweig umfasst:

      eine erste Zellenanordnung (6a), die mehrere in Reihe geschaltete Umrichterzellen (3) umfasst;
      eine zweite Zellenanordnung (6b), die mehrere in Reihe geschaltete Umrichterzellen (3) umfasst; und
      eine Unterbrecheranordnung (B), die mehrere Unterbrecher (B1, B2, B3) umfasst und so angeordnet ist, dass sie das abwechselnde Verbinden der ersten und der zweiten Zellenanordnung in Reihe und parallel mithilfe der mehreren Unterbrecher ermöglicht;

wobei die Unterbrecheranordnung drei Unterbrecher (B1, B2, B3) umfasst, die entlang einer Sammelschiene des Phasenzweigs in Reihe geschaltet sind, wobei die erste Zellenanordnung (6a) über den ersten und zweiten Unterbrecher (B1, B2) verbunden ist und die zweite Zellenanordnung (6b) über den zweiten und dritten Unterbrecher (B2, B3) verbunden ist; und

wobei das Steuersystem (10) eine Verarbeitungsschaltung (11) und einen Datenspeicher (12) umfasst, der Anweisungen (13) speichert, die durch die Verarbeitungsschaltung ausführbar sind, wodurch das Steuersystem betreibbar ist, um:

Strominformationen zu erhalten, dass ein Strom durch den Phasenzweig über einem vorbestimmten Stromschwellenwert liegt, und basierend auf den erhaltenen Strominformationen mithilfe der mehreren Unterbrecher die erste und zweite Zellenanordnung parallel zu schalten; und

Spannungsinformationen zu erhalten, dass eine Spannung über dem Phasenzweig über einem vorbestimmten Spannungsschwellenwert liegt, und basierend auf den erhaltenen Spannungsinformationen mithilfe der mehreren Unterbrecher die erste und zweite Zellenanordnung in Reihe zu schalten;

so dass die erste und zweite Zellenanordnung abwechselnd in Reihe geschaltet sind, wenn die Spannung über dem Phasenzweig hoch ist, und parallel geschaltet sind, wenn der Strom durch den Phasenzweig hoch ist.

2. MMC nach Anspruch 1, wobei die erste Zellenanordnung (6a) eine Topologie aufweist, die symmetrisch zu einer Topologie der zweiten Zellenanordnung (6b) ist.

3. MMC nach Anspruch 1, wobei die erste Zellanordnung (6a) eine Topologie aufweist, die asymmetrisch zu einer Topologie der zweiten Zellanordnung (6b) ist.

4. MMC nach einem der vorhergehenden Ansprüche, wobei die erste und zweite Zellenanordnung (6a, 6b) in Kombination mit der Unterbrecheranordnung (B) ein Modul (7) darstellen, und wobei der Phasenzweig (2) mehrere in Reihe geschaltete solche Module umfasst.

5. MMC nach Anspruch 4, wobei die in Reihe geschalteten Module alle die gleiche Topologie aufweisen.

6. MMC nach einem der vorhergehenden Ansprüche, wobei die erste und/oder die zweite Zellenanordnung umfasst:

eine erste Zellunteranordnung (6a), die mehrere in Reihe geschaltete Umrichterzellen (3) umfasst;
eine zweite Zellenunteranordnung (6b), die mehrere in Reihe geschaltete Umrichterzellen (3) umfasst; und
eine Unterbrecher-Unteranordnung (B), die mehrere Unterbrecher (B1, B2, B3) umfasst und so angeordnet ist, dass sie abwechselnd die erste und die zweite ZellenUnteranordnung in Reihe und parallel mithilfe der mehreren Unterbrecher verbindet.

7. MMC nach einem der vorhergehenden Ansprüche, wobei der MMC (1) ein statischer Synchronkompensator, STATCOM, oder ein Hochspannungs-Gleichstrom-Umrichter, HVDC-Umrichter, ist.

8. Verfahren zum Steuern eines Leistungsumrichter-Phasenzweigs (2) eines modularen mehrstufigen Umrichters, MMC, (1), wobei Spannung und Strom in Quadratur zueinander stehen, so dass der Strom durch und die Spannung über den Phasenzweig nicht ihr Maximum zur gleichen Zeit erreichen, wobei der Phasenzweig umfasst:

eine erste Zellenanordnung (6a), die mehrere in Reihe geschaltete Umrichterzellen (3) umfasst;
eine zweite Zellenanordnung (6b), die mehrere in Reihe geschaltete Umrichterzellen (3) umfasst; und
einer Unterbrecheranordnung (B), die mehrere Unterbrecher (B1, B2, B3) umfasst, wobei die Unterbrecheranordnung drei Unterbrecher (B1, B2, B3) umfasst, die entlang eines Busses des Phasenzweigs in Reihe geschaltet sind, wobei die erste Zellenanordnung (6a) über den ersten und zweiten Unterbrecher (B1, B2) verbunden ist und die zweite Zellenanordnung (6b) über den zweiten und dritten Unterbrecher (B2, B3) verbunden ist;
wobei das Verfahren umfasst:

Erhalten (M1) von Strominformationen, dass ein Strom durch den Phasenzweig über einem vorbestimmten Stromschwellenwert liegt, und

basierend auf den erhaltenen (M1) Strominformationen, mithilfe der mehreren Unterbrecher, Parallelschalten (M2) der ersten und zweiten Zellenanordnungen; und

Erhalten (M3) von Spannungsinformationen, dass eine Spannung über dem Phasenzweig über einem vorbestimmten Spannungsschwellenwert liegt, und

basierend auf den erhaltenen (M3) Spannungsinformationen mithilfe der mehreren Unterbrecher, in Reihe schalten (M4) der ersten und zweiten Zellenanordnung;

so dass die erste und zweite Zellenanordnung abwechselnd in Reihe geschaltet sind, wenn die Spannung über dem Phasenzweig hoch ist, und parallel geschaltet sind, wenn der Strom durch den Phasenzweig hoch ist.

9. Verfahren nach Anspruch 8, durchgeführt in einem Steuersystem (10), das in dem MMC (1) umfasst ist.

10. Computerprogrammprodukt (12), das computerausführbare Komponenten (13) umfasst, um ein Steuersystem (10) zu veranlassen, das Verfahren nach einem der Ansprüche 8 bis 9 durchzuführen, wenn die computerausführbaren Komponenten auf einer Verarbeitungsschaltung (11) ausgeführt werden, die in dem Steuersystem umfasst ist.

**Revendications**

1. Convertisseur modulaire multi-niveaux, MMC (1), comprenant :

   un système de commande (10) conçu pour commander le MMC ; et
   une branche de phase de convertisseur de puissance (2), la branche de phase comprenant :

      un premier agencement de cellules (6a) comprenant une pluralité de cellules de convertisseur connectées en série (3) ;
      un second agencement de cellules (6b) comprenant une pluralité de cellules de convertisseur connectées en série (3) ; et
      un agencement de disjoncteurs (B) comprenant une pluralité de disjoncteurs (B1, B2, B3) et conçu pour permettre la connexion alternée des premier et second agencements de cellules en série et en parallèle au moyen de ladite pluralité de disjoncteurs ;

   dans lequel l'agencement de disjoncteurs comprend trois disjoncteurs (B1, B2, B3) connectés en série le long d'un bus de la branche de phase, le premier agencement de cellules (6a) étant connecté aux bornes des premier et deuxième disjoncteurs (B1, B2) et le second agencement de cellules (6b) étant connecté aux bornes des deuxième et troisième disjoncteurs (B2, B3) ; et
   dans lequel le système de commande (10) comprend des circuits de traitement (11) et une mémoire de données (12) qui mémorise des instructions (13) exécutables par ledit circuit de traitement moyennant quoi ledit système de commande sert à :

      obtenir des informations de courant qu'un courant passant par la branche de phase dépasse un seuil de courant prédéterminé et en fonction des informations de courant obtenues, au moyen de la pluralité de disjoncteurs, connecter les premier et second agencements de cellules en parallèle ; et
      obtenir des informations de tension qu'une tension aux bornes de la branche de phase dépasse un seuil de tension prédéterminé, et en fonction des informations de tension obtenues au moyen de la pluralité de disjoncteurs, connecter les premier et second agencements de cellules en série ;
      de telle sorte que les premier et second agencements de cellules soient connectés alternativement en série quand la tension aux bornes de la branche de phase est élevée et en parallèle quand le courant à travers la branche de phase est élevé.

2. MMC selon la revendication 1, dans lequel le premier agencement de cellules (6a) a une topologie qui est symétrique à une topologie du second agencement de cellules (6b).

3. MMC selon la revendication 1, dans lequel le premier agencement de cellules (6a) à une topologie qui est asymétrique à une topologie du second agencement de cellules (6b).

4. MMC selon n'importe quelle revendication précédente, dans lequel les premier et second agencements de cellules (6a, 6b) en combinaison avec l'agencement de disjoncteurs (B) constituent un module (7), et dans lequel la branche de phase (2) comprend une pluralité de tels modules connectés en série.

**5.** MMC selon la revendication 4, dans lequel les modules connectés en série ont tous la même topologie.

**6.** MMC selon n'importe quelle revendication précédente, dans lequel le premier et/ou le second agencement de cellules comprennent :

un premier sous-agencement de cellules (6a) comprenant une pluralité de cellules de convertisseur connectées en série (3) ;
un second sous-agencement de cellules (6b) comprenant une pluralité de cellules de convertisseur connectées en série (3) ; et
un sous-agencement de disjoncteurs (B) comprenant une pluralité de disjoncteurs (B1, B2, B3) et conçu pour connecter alternativement les premier et second sousagencements de cellules en série et en parallèle au moyen de ladite pluralité de disjoncteurs.

**7.** MMC selon n'importe quelle revendication précédente, le MMC (1) étant un compensateur synchrone statique, STATCOM, ou un convertisseur haute tension à courant continu, HVDC.

**8.** Procédé de commande d'une branche de phase de convertisseur de puissance (2) d'un convertisseur modulaire multi-niveaux, MMC, (1), dans lequel la tension et le courant sont en quadrature l'une par rapport à l'autre de telle sorte que le courant passant par la branche de phase et la tension aux bornes de cette dernière n'atteignent pas leur maximum en même temps, la branche de phase comprenant :

un premier agencement de cellules (6a) comprenant une pluralité de cellules de convertisseur connectées en série (3) ;
un second agencement de cellules (6b) comprenant une pluralité de cellules de convertisseur connectées en série (3) ; et
un agencement de disjoncteurs (B) comprenant une pluralité de disjoncteurs (B1, B2, B3), l'agencement de disjoncteurs comprenant trois disjoncteurs (B1, B2, B3) connectés en série le long d'un bus de la branche de phase, le premier agencement de cellules (6a) étant connecté aux bornes des premier et deuxième disjoncteurs (B1, B2) et le second agencement de cellules (6b) étant connecté aux bornes des deuxième et troisième disjoncteurs (B2, B3) ; et
le procédé comprenant :

l'obtention (MI) d'informations de courant qu'un courant passant par la branche de phase dépasse un seuil de courant prédéterminé et
en fonction des informations de courant obtenues (M1), au moyen de la pluralité de disjoncteurs, la connexion (M2) des premier et second agencements de cellules en parallèle ; et
l'obtention (M3) d'informations de tension qu'une tension aux bornes de la branche de phase dépasse un seuil de tension prédéterminé, et
en fonction des informations de tension obtenues (M3), au moyen de la pluralité de disjoncteurs, la connexion (M4) des premier et second agencements de cellules en série ;
de telle sorte que les premier et second agencements de cellules soient connectés alternativement en série, quand la tension aux bornes de la branche de phase est élevée, et en parallèle, quand le courant à travers la branche de phase est élevé.

**9.** Procédé selon la revendication 8, réalisé dans un système de commande (10) compris dans le MMC (1).

**10.** Produit-programme informatique (12) comprenant des composantes exécutables par ordinateur (13) pour amener un système de commande (10) à réaliser le procédé selon l'une quelconque des revendications 8-9 quand les composantes exécutables par ordinateur sont exécutées sur des circuits de traitement (11) compris dans le système de commande.

$v_U$    $i_U$    3    1

Controller 10

Fig. 1a

2a    3

2b    3

2c    3

1

Controller 10

Fig. 1b

Fig. 1c

Fig. 2

Fig. 3

Fig. 4

Fig. 5

Fig. 6

**EP 3 729 631 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017016675 A
- US 2014140104 A
- US 2015365011 A